# EUROPEAN PATENT APPLICATION

(11) **EP 4 825 996 A1**
(43) Date of publication of application: **21.10.2026**
(21) Application number: 25800327.6
(22) Date of filing: 28.04.2025
(51) Int. Cl.: C22B 3/00, C01G 51/00, C01G 53/00, C22B 3/44

(54) **WET TREATMENT PROCESS FOR NICKEL LATERITE ORE**

(30) Priority: 25.02.2025 CN 202510209443
(71) Applicant: China Enfi Engineering Corporation, Beijing 100038 (CN); China Enfi Engineering Co., Ltd., Beijing 100038 (CN)
(72) Inventor: SUN, Ninglei, Beijing 100038 (CN); YIN, Shuyan, Beijing 100038 (CN); DING, Jian, Beijing 100038 (CN); LIU, Zhen, Beijing 100038 (CN); FU, Junjian, Beijing 100038 (CN); HAN, Guoqiang, Beijing 100038 (CN); LIU, Guo, Beijing 100038 (CN)
(74) Representative: Germain Maureau
(86) International application number: PCT/CN2025/091677
(87) International publication number: WO 2026/178976

(57) **Abstract**

The present disclosure provides a wet treatment process for laterite-nickel ore. The wet treatment process includes: S1, conducting an acid leaching treatment on the laterite-nickel ore with an inorganic acid to obtain a leached ore slurry; S2, sequentially conducting a liquid-solid separation and a countercurrent washing on the leached ore slurry to obtain a washed slurry and a leached slag; S3, adding a first oxidant and a first neutralizer to the washed slurry for conducting an iron and aluminum removal treatment to obtain a solution with iron and aluminum removed and an iron and aluminum slag; S4, conducting a nickel-cobalt precipitation treatment on the solution with iron-aluminum removed to obtain a precipitated slurry; S5, continuously conducting a thickening separation treatment on the precipitated slurry to obtain an underflow and an overflow; and S6, conducting a washing post-treatment on the underflow in sequence to obtain a nickel-cobalt hydroxide product. The present disclosure provides a short wet treatment process for laterite-nickel ore, which reduces the production cost and energy consumption, and simultaneously improves the recovery rate of nickel and cobalt, the overall recovery rate of scandium, and the quality of nickel-cobalt hydroxide product.

## Description

### Technical Field

### CROSS-REFERENCE TO RELATED APPLICATIONS

The present disclosure claims priority to Chinese Invention Patent Application No. 202510209443.X, filed in the National Intellectual Property Administration, PRC on February 25, 2025, titled "Wet Treatment Process for Laterite-nickel ore", the entire contents of which are incorporated herein by reference.

### Technical Field

The present disclosure relates to the technical field of hydrometallurgy of laterite-nickel ore, in particular to a wet treatment process for laterite-nickel ore.

### Background Art

At present, laterite-nickel ore becomes the main raw material in the EV battery industry chain, wherein the high-pressure leaching process is the mainstream process for producing nickel-cobalt intermediate products, and the main process is: leaching, pre-neutralization, two-stage iron and aluminum removal, two-stage nickel-cobalt precipitation, and tailings neutralization. The process is mature and has been widely used by enterprises. However, the present inventors have recognized that this process has the following problems:
(1) The process, comprising two-stage iron-aluminum removal and two-stage nickel-cobalt precipitation, is long. The purpose of the two-stage iron and aluminum removal is: a pH is controlled to be relatively low, generally 3.8, during a first stage iron and aluminum removal, so that nickel-cobalt loss is reduced, and an iron and aluminum slag is discharged from the system; a pH is controlled to be 4.8 during a second stage iron and aluminum removal, so that iron and aluminum is completely precipitated to provide an iron and aluminum free solution for the subsequent nickel-cobalt recovery, and the second-stage iron and aluminum slag having a high content of nickel and cobalt is returned to the leached ore slurry, then the residual acid is neutralized to recover nickel and cobalt. The purpose of the two-stage nickel-cobalt precipitation is: a pH of a first stage nickel-cobalt precipitation is controlled at a relatively low level, as a nickel-cobalt hydroxide precipitate (MHP) product; a pH of a second-stage nickel-cobalt precipitation is controlled at a relatively high level, and all the nickel and cobalt are precipitated, then returned to the leached ore slurry, the residual acid is neutralized to recover nickel and cobalt.
(2) The quality of the MHP product is poor, with amass content of magnesium generally about 1% to5%, and amass content of manganese about 5% to 8%, which increase the complexity and cost of the subsequent refining process.
(3) Scandium in the iron and aluminum slag is lost and its overall recovery rate is low.

In view of this, the present disclosure is proposed.

### Disclosure

In view of the above problems, an object of the present disclosure is to provide a wet treatment process for laterite-nickel ore, so as to solve the problems of long process, poor quality of nickel-cobalt hydroxide product and low overall recovery rate of scandium existing in precipitating nickel and cobalt by a high-pressure leaching process of laterite-nickel ore in the related art.

In order to achieve the above object, according to an aspect of the present disclosure, there is provided a wet treatment process for laterite-nickel ore, the laterite-nickel ore being selected from a group consisting of a limonite-type laterite-nickel ore and an eluvial laterite-nickel ore, wherein the wet treatment process includes: S1, conducting an acid leaching treatment on the laterite-nickel ore with an inorganic acid to obtain a leached ore slurry; S2, sequentially conducting a liquid-solid separation and a countercurrent washing on the leached ore slurry to obtain a washed slurry and a leached slag; S3, adding a first oxidant and a first neutralizer to the washed slurry for conducting an iron and aluminum removal treatment to obtain a solution with iron and aluminum removed and an iron and aluminum slag; S4, conducting a nickel-cobalt precipitation treatment on the solution with iron and aluminum removed to obtain a precipitated slurry; S5, continuously conducting a thickening separation treatment on the precipitated slurry to obtain an underflow and an overflow; and S6, conducting a washing post-treatment on the underflow in sequence to obtain a nickel-cobalt hydroxide product; wherein the iron and aluminum slag is returned to the acid leaching treatment.

An optional technical solution is that, in the above step S3, the iron and aluminum removal treatment is conducted at a temperature of 25°C to 100°C for a period of 0.5 h to 8 h; and/or the iron-aluminum removal treatment has an end point pH of 3.8 to 5.5; and/or the iron and aluminum slag has a mass content of nickel of 1% to 8%, and a mass content of cobalt of 0.1% to 0.9%.

An optional technical solution is that, in the above step S3, the first oxidant is any one or more selected from a group consisting of a mixed gas of oxygen and sulfur dioxide, oxygen, ozone, a persulfate, hydrogen peroxide, a nitrite, and a perchlorate, and/or an addition amount of the first oxidant is 1.0 to 10.0 times a chemical reaction stoichiometric ratio of ferrous iron in the washed slurry.

An optional technical solution is that, in the above step S3, the first neutralizer is any one or more selected from a group consisting of sodium carbonate, sodium bicarbonate, potassium carbonate, potassium bicarbonate, magnesium carbonate, magnesium bicarbonate, ammonium carbonate, ammonium bicarbonate, calcium oxide, magnesium oxide, sodium hydroxide, potassium hydroxide, aqueous ammonia, calcium hydroxide, magnesium hydroxide, calcium carbonate, calcium bicarbonate, limestone, magnesia, magnesite, dolomite, and marble.

An optional technical solution is that, in the above step S4, the nickel-cobalt precipitation treatment is conducted at a temperature of 25°C to 100°C for a period of 0.5 h to 8 h; and/or the nickel-cobalt precipitation treatment has an end point a pH of 7.0 to 9.0.

An optional technical solution is that, in the above step S4, the nickel-cobalt precipitation treatment comprises: directly adding a precipitant to the solution with iron and aluminum removed to conduct the nickel-cobalt precipitation treatment; or reacting a magnesium-containing solution with a precipitant to produce active magnesium hydroxide, and then adding the active magnesium hydroxide to the solution with iron and aluminum removed to conduct the nickel-cobalt precipitation treatment; and/or the precipitant is any one or more selected from a group consisting of sodium carbonate, sodium bicarbonate, potassium carbonate, potassium bicarbonate, magnesium carbonate, magnesium bicarbonate, ammonium carbonate, ammonium bicarbonate, calcium oxide, magnesium oxide, sodium hydroxide, potassium hydroxide, aqueous ammonia, calcium hydroxide, magnesium hydroxide, calcium carbonate and calcium bicarbonate.

An optional technical solution is that, in the above step S1, the acid leaching treatment is conducted at a temperature of 90°C to 280°C for a period of 0.5 h to 8 h; and/or the acid leaching treatment has an end point acidity of 0.1 g/L to 50 g/L; and the acid leaching treatment is conducted at a pressure of 1 MPa to 4 MPa.

An optional technical solution is that, in the above step S1, the inorganic acid is any one or more selected from a group consisting of sulfuric acid, hydrochloric acid and nitric acid.

An optional technical solution is that, in the above step S2, the liquid-solid separation is any one selected from a group consisting of a thickener separation and a filter press separation; and/or the countercurrent washing is any one selected from a group consisting of series countercurrent washing by a multi-stage thickener, countercurrent washing by a filter press, and slurrying countercurrent washing.

An optional technical solution is that, in the above step S6, the washing post-treatment process comprises a washing treatment with an acidic solution, a washing treatment with an alkaline solution and a washing treatment with a nickel and cobalt containing solution conducted in sequence.

An optional technical solution is that, in the above step S6, a mass of an acidic solution for the washing treatment with an acidic solution is 0.01% to 100% of a solid mass of the nickel-cobalt hydroxide product; and/or a mass concentration of the acidic solution is 0.01 wt% to 5 wt%, and the acidic solution is any one or more selected from a group consisting of sulfuric acid solution, hydrochloric acid solution, nitric acid solution, carbonic acid solution and an organic acid solution; and/or the washing treatment with an acidic solution is conducted at a temperature of 25°C to 100°C for a period of 0.5 h to 8 h.

An optional technical solution is that, in the above step S6, a mass of an alkaline solution for the washing treatment with an alkaline solution is 0.01% to 100% of a solid mass of the nickel-cobalt hydroxide product; and/or a mass concentration of the alkaline solution is 0.1 wt% to 40 wt%, and the alkaline solution is any one or more selected from a group consisting of sodium hydroxide solution, potassium hydroxide solution, aqueous ammonia and carbonate solution; and/or the washing treatment with an alkaline solution is conducted at a temperature of 25°C to 100°C for a period of 0.5 h to 8 h.

An optional technical solution is that, in the above step S6, a mass of a nickel and cobalt containing solution for the washing treatment with a nickel and cobalt containing solution is 0.01% to 100% of a solid mass of the nickel-cobalt hydroxide product; a mass concentration of nickel and cobalt in the nickel and cobalt containing solution is 0.1 g/L to 100 g/L, and the nickel and cobalt containing solution is any one or more selected from a group consisting of the leachate, the solution before iron and aluminum removal, the solution with iron and aluminum removed, and a self-formulated nickel and cobalt solution; and the washing treatment with a nickel and cobalt containing solution is conducted at a temperature of 25°C to 100°C for a period of 0.5 h to 8 h.

An optional technical solution is that, the above wet treatment process further comprises: returning a portion of the overflow to the countercurrent washing; conducting a neutralization treatment for the remaining portion of the overflow and the leached slag to obtain a tailings slurry; the neutralization treatment is conducted at a temperature of 25°C to 100°C, and/or the neutralization treatment is conducted for a period of 0.5 h to 8 h; and/or the neutralization treatment has an end point pH of 7.0 to 9.0.

An optional technical solution is that, a second oxidant and a second neutralizer are added during the neutralization treatment, and the second oxidant is any one or more selected from a group consisting of a mixed gas of oxygen and sulfur dioxide, oxygen, ozone, a persulfate, hydrogen peroxide, a nitrite and a perchlorate; and the second neutralizer is any one or more selected from a group consisting of sodium carbonate, sodium bicarbonate, potassium carbonate, potassium bicarbonate, magnesium carbonate, magnesium bicarbonate, ammonium carbonate, ammonium bicarbonate, calcium oxide, magnesium oxide, sodium hydroxide, potassium hydroxide, aqueous ammonia, calcium hydroxide, magnesium hydroxide, calcium carbonate and calcium bicarbonate.

The core of the present disclosure is to provide a short wet treatment process for laterite-nickel ore, in which a washed slurry and a leached slag are obtained by acid leaching treatment, liquid-solid separation and countercurrent washing, the washed slurry is subjected to an one-stage iron and aluminum removal to obtain a solution with iron and aluminum removed and an iron and aluminum slag, the solution with iron and aluminum removed is subjected to an one-stage nickel-cobalt precipitation and post-treatment steps, and the iron and aluminum slag is returned to the step of acid leaching treatment, thereby realizing efficient enrichment of nickel and cobalt and quality improvement of a nickel-cobalt hydroxide product. The present disclosure has the advantage that the complex process of traditional two-stage iron and aluminum removal and two-stage nickel-cobalt precipitation is shortened, production cost and energy consumption are reduced, and simultaneously the recovery rate of nickel and cobalt, the overall recovery rate of scandium, and the quality of nickel-cobalt hydroxide products are improved.

For the accomplishment of the foregoing and related objects, one or more aspects of the present disclosure comprise features which will be described in detail later and specifically indicated in the claims. The following description and the attached drawings set forth in detail certain illustrative aspects of the disclosure. However, these aspects are indicative of only a few of the various ways in which the principle of the disclosure may be employed. Also, the present disclosure is intended to include all such aspects and their equivalents.

### Brief Description of Drawings

By referring to the following description in conjunction with the accompanying drawings and the contents of the claims, and with a more comprehensive understanding of this disclosure, other objects and results of the present disclosure will become more apparent and readily appreciated. The accompanying drawings, which constitute a part of the present disclosure, are used to provide a further understanding of the present disclosure, and the illustrative embodiments of the present disclosure and the description thereof are used to explain the present disclosure and do not constitute improper limitations to the present disclosure.

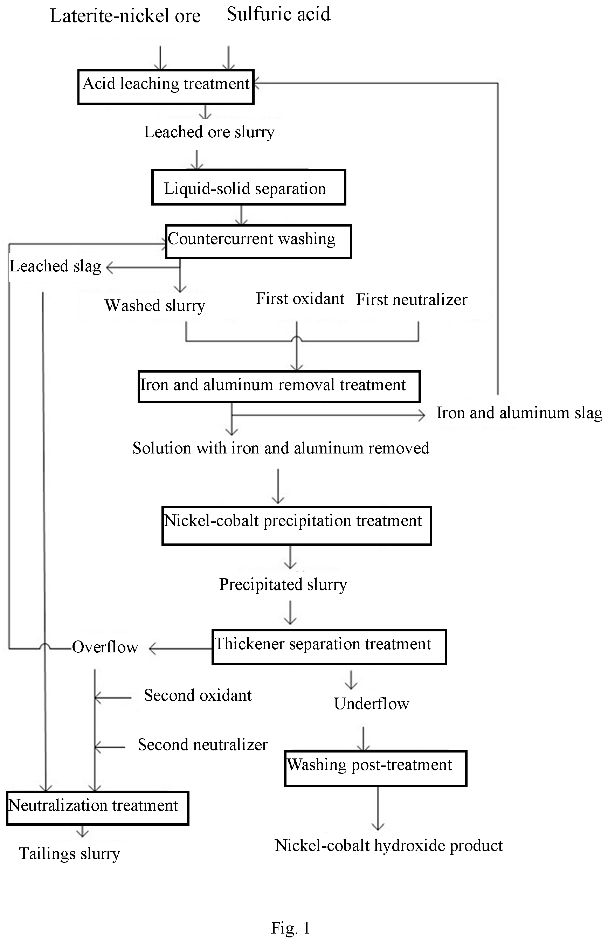

FIG. 1 shows a flowchart of a wet treatment process for laterite-nickel ore according to Example 1 of the present disclosure.

The same reference numerals indicate similar or corresponding features or functions throughout the drawings.

### Best Mode for Carrying out the Invention

In the following description, for purposes of explanation, numerous specific details are set forth to provide a thorough understanding of one or more embodiments. However, it is apparent that the embodiments in the present disclosure and the features in the embodiments may be combined with each other without conflict; and the embodiments may also be implemented without these specific details. In other examples, well-known structures and devices are shown in block diagram form for ease of description of one or more embodiments.

Specific embodiments of the present disclosure will be described in detail below with reference to the accompanying drawings.

As described in the background art section, in the related art, the high-pressure leaching process for precipitation of nickel and cobalt of laterite-nickel ore has problems of long process, poor quality of nickel-cobalt hydroxide product, and low overall recovery rate of scandium.

In order to solve the above problems, the present disclosure provides a wet treatment process for laterite-nickel ore, the laterite-nickel ore being selected from a group consisting of a limonite-type laterite-nickel ore and an eluvial laterite-nickel ore, wherein the wet treatment process comprises: S1, conducting an acid leaching treatment on the laterite-nickel ore with an inorganic acid to obtain a leached ore slurry; S2, sequentially conducting a liquid-solid separation and a countercurrent washing on the leached ore slurry to obtain a washed slurry and a leached slag; S3, adding a first oxidant and a first neutralizer to the washed slurry for conducting iron and aluminum removal treatment to obtain a solution with iron and aluminum removed and an iron and aluminum slag; S4, conducting a nickel-cobalt precipitation treatment on the solution with iron and aluminum removed to obtain a precipitated slurry; S5, continuously conducting a thickening separation treatment on the precipitated slurry to obtain an underflow and an overflow; and S6, conducting a washing post-treatment on the underflow in sequence to obtain a nickel-cobalt hydroxide product; wherein the iron and aluminum slag is returned to the acid leaching treatment step.

The core of the present disclosure is to provide a short wet treatment process for laterite-nickel ore, in which a washed slurry and a leached slag are obtained by an acid leaching treatment, a liquid-solid separation and a countercurrent washing, the washed slurry is subjected to an one-stage iron and aluminum removal to obtain a solution with iron and aluminum removed and an iron and aluminum slag, the solution with iron and aluminum removed is subjected to an one-stage nickel-cobalt precipitation and post-treatment steps, and the iron and aluminum slag is returned to the step of the acid leaching treatment, thereby realizing efficient enrichment of nickel and cobalt and quality improvement of a nickel-cobalt hydroxide product. The present disclosure has the advantage that the complex process of traditional two-stage iron and aluminum removal and two-stage nickel-cobalt precipitation is shortened, the production cost and energy consumption is reduced, meanwhile the recovery rate of nickel and cobalt, the overall recovery rate of scandium, and the quality of nickel-cobalt hydroxide products are improved.

In addition, the iron and aluminum slag may be mixed with the laterite-nickel ore and then fed to an autoclave for acid leaching treatment, or it may be fed to the autoclave separately. After the iron and aluminum slag is dissolved in the autoclave, nickel, cobalt and scandium enter the solution, and iron and aluminum form aluminiumalum and hematite respectively, and precipitate into the slag.

In some embodiments of the present disclosure, in the above step S3, the iron-aluminum removal treatment is conducted at a temperature of 25°C to 100°C for a period of 0.5 h to 8 h; and/or the iron-aluminum removal treatment has an end point pH of 3.8 to 5.5; and/or the iron and aluminum slag has a mass content of nickel of 1% to 8% and a mass content of cobalt of 0.1% to 0.9%.

Although the present disclosure has only one step of iron and aluminum removal treatment, the progress of the iron and aluminum removal chemical reaction is promoted by controlling the conditions such as temperature and time of the iron and aluminum removal treatment. The specific end point pH of the iron-aluminum removal treatment achieves complete precipitation of iron and aluminum and minimal dissolution of nickel and cobalt as much as possible, avoids unnecessary loss of nickel and cobalt in subsequent treatments, and reduces the effect on the quality of the nickel-cobalt hydroxide product. In addition, in order to further improve the comprehensive efficiency and effect of the above iron and aluminum removal treatment, it is preferable that the temperature for the iron-aluminum removal treatment is 40°C to 90°C, the time for the iron-aluminum removal treatment is 4 h to 6 h, and the end point pH of the iron-aluminum removal treatment is 4.5 to 5.5, such optimization conditions are more helpful to minimize the nickel content and cobalt content contained in the iron and aluminum slag. For example, according to the present disclosure, the iron and aluminum slag has a mass content of nickel of 1% to6% and a mass content of cobalt of 0.1% to 0.8% by controlling the conditions of the iron and aluminum removal treatment, thereby reducing the loss of nickel and cobalt in one-step iron and aluminum removal treatment as much as possible. In addition, the temperature for the iron and aluminum removal treatment may be 25°C, 30°C, 40°C, 45°C, 50°C, 55°C, 60°C, 65°C, 70°C, 75°C, 80°C, 85°C, 90°C, 95°C or 100°C, and it may also be any point value within the range of 25°C to100°C; the time for the iron and aluminum removal treatment may be 0.5 h, 1 h, 1.5 h, 2 h, 2.5 h, 3 h, 3.5 h, 4 h, 4.5 h, 5 h, 5.5 h, 6 h, 6.5 h, 7 h, 7.5 h or 8 h, and it may also be any point value within the range of 0.5 h to 8 h; the end point pH of the iron and aluminum removal treatment may be 3.8, 4.0, 4.2, 4.5, 5.0, 5.2 or 5.5, and it may also be any point value within the range of 3.8 to 5.5.

In some embodiments of the present disclosure, in the above step S3, the first oxidant is any one or more selected from a group consisting of a mixed gas of oxygen and sulfur dioxide, oxygen, ozone, a persulfate, hydrogen peroxide, a nitrite, and a perchlorate, and/or an addition amount of the first oxidant is 1.0 to 10.0 times a chemical reaction stoichiometric ratio of ferrous iron in the washed slurry.

The selection and addition amount (1.0 to 10.0 times, preferably 5.0 to 10.0 times the chemical reaction stoichiometric ratio) of the first oxidant ensure that the ferrous iron is oxidized to ferric iron, thereby promoting the reaction of the ferric iron with the first neutralizer to form a precipitate. The excess amount of the first oxidant can ensure that the ferrous iron is completely oxidized, avoiding contamination of the ferrous iron in subsequent processes or decline of the quality of the mixed nickel cobalt hydroxide product. Meanwhile, the present disclosure prefers the above-mentioned oxidants with various kinds and wide sources, which helps to adapt to different operating conditions and cost control, and provides more flexibility for the iron and aluminum removal treatment process. In addition, the addition amount of the first oxidant may be 1.0 times, 2.0 times, 3.0 times, 4.0 times, 5.0 times, 6.0 times, 7.0 times, 8.0 times, 9.0 times or 10.0 times the chemical reaction stoichiometric ratio of the ferrous iron in the washed slurry, and it may also be any point value within the range of 1.0 times to 10.0 times.

In some embodiments of the present disclosure, in the above step S3, the first neutralizer is any one or more selected from a group consisting of sodium carbonate, sodium bicarbonate, potassium carbonate, potassium bicarbonate, magnesium carbonate, magnesium bicarbonate, ammonium carbonate, ammonium bicarbonate, calcium oxide, magnesium oxide, sodium hydroxide, potassium hydroxide, aqueous ammonia, calcium hydroxide, magnesium hydroxide, calcium carbonate, calcium bicarbonate, limestone, magnesia, magnesite, dolomite, and marble.

The diverse selection of the first neutralizer enables the iron and aluminum to be effectively precipitated under different pH value and temperature conditions, while minimizing the effect on the nickel and cobalt as much as possible. In addition, different first neutralizer can adapt to different leachate composition and reaction conditions, thereby helping to improve the recovery rate of metals such as nickel, cobalt and scandium, and reducing the consumption of reagents.

In some embodiments of the present disclosure, in the above step S4, the nickel-cobalt precipitation treatment is conducted at a temperature of 25°C to 100°C for a period of 0.5 h to 8 h; and the nickel-cobalt precipitation treatment has an end point pH of 7.0 to 9.0.

The above optimized conditions for nickel-cobalt precipitation treatment are favorable for enabling the nickel and cobalt to be completely precipitated as much as possible, while reducing the co-precipitation of impurities such as magnesium and manganese, and improving the purity and quality of the nickel-cobalt hydroxide product. Reasonable control of the temperature and time for the nickel-cobalt precipitation treatment is beneficial to improve the efficiency of nickel-cobalt precipitation, and the specific end point pH is helpful to more accurately separate nickel and cobalt from other impurities as much as possible, thereby reducing the complexity and cost of the subsequent refining process. Further, preferably, the temperature for the nickel-cobalt precipitation treatment is 40°C to 90°C, and the time for the nickel-cobalt precipitation treatment is 4 h to 6 h. In addition, the temperature for the nickel-cobalt precipitation treatment may be 25°C, 30°C, 40°C, 45°C, 50°C, 55°C, 60°C, 65°C, 70°C, 75°C, 80°C, 85°C, 90°C, 95°C or 100°C, and it may also be any point value within the range of 25°C to 100°C; the time for the nickel-cobalt precipitation treatment may be 0.5 h, 1 h, 1.5 h, 2 h, 2.5 h, 3 h, 3.5 h, 4 h, 4.5 h, 5 h, 5.5 h, 6 h, 6.5 h, 7 h, 7.5 h or 8 h, and it may also be any point value within the range of 0.5 h to 8 h; the end point pH of the nickel-cobalt precipitation treatment may be 7.0, 7.5, 8.0, 8.5, or 9.0, and it may also be any point value within the range of 7.0 to 9.0.

In some embodiments of the present disclosure, in the above step S4, the process of the nickel-cobalt precipitation treatment comprises: directly adding a precipitant to the solution with iron and aluminum removed to perform the nickel-cobalt precipitation treatment; or reacting a magnesium-containing solution with a precipitant to produce active magnesium hydroxide, and then adding the active magnesium hydroxide to the solution with iron and aluminum removed to conduct the nickel-cobalt precipitation treatment; and/or the precipitant is any one or more selected from a group consisting of sodium carbonate, sodium bicarbonate, potassium carbonate, potassium bicarbonate, magnesium carbonate, magnesium bicarbonate, ammonium carbonate, ammonium bicarbonate, calcium oxide, magnesium oxide, sodium hydroxide, potassium hydroxide, aqueous ammonia, calcium hydroxide, magnesium hydroxide, calcium carbonate and calcium bicarbonate.

The two methods of nickel-cobalt precipitation treatment (direct precipitation and active magnesium hydroxide precipitation) improve the flexibility and efficiency of the nickel-cobalt precipitation treatment process. Among them, the method of directly adding the precipitant to conduct nickel-cobalt precipitation is simpler and more direct, which is more suitable for the case where the concentration of nickel and cobalt is higher and the impurities are less. Although the method of converting the precipitant into the active magnesium hydroxide precipitation in advance adds the conversion step, the active magnesium hydroxide precipitation is more suitable for improving the selectivity and efficiency of precipitation and reducing the loss of nickel and cobalt when the concentration of nickel and cobalt is low or the impurities is high, wherein, the magnesium-containing solution is preferably any one or more selected from a group consisting of magnesium sulfate solution, magnesium nitrate solution and magnesium chloride solution, a mass concentration of the magnesium-containing solution is preferably 0.1 g/L to 40 g/L, for example, a mass concentration of the magnesium-containing solution may be 0.1 g/L, 0.5 g/L, 1 g/L, 3 g/L, 5 g/L, 10 g/L, 15 g/L, 20 g/L, 25 g/L, 30 g/L, 35 g/L or 40 g/L.

In some embodiments of the present disclosure, in the above step S1, the acid leaching treatment is conducted at a temperature of 90°C to 280°C for a period of 0.5 h to 8 h; and/or the acid leaching treatment has an end point acidity of 0.1 g/L to 50 g/L; and/or the acid leaching treatment is conducted at a pressure of 1 MPa to 4 MPa.

The above optimized conditions of the acid leaching treatment are conducive to improving the leaching rate of nickel and cobalt, reducing acid consumption, and controlling the properties of the leached slag. The temperature and time for the acid leaching treatment help to improve the leaching efficiency, while reasonable end point acidity is beneficial for balancing nickel-cobalt leaching and subsequent treatment. The acid leaching treatment may be atmospheric pressure leaching or high-pressure leaching, and more preferably, high-pressure leaching improves the leaching efficiency of nickel and cobalt. The acid-leached laterite-nickel ore may be a limonite-type laterite-nickel ore, an eluvial laterite-nickel ore, or a mixed ore in any proportion. The limonite-type laterite-nickel ore and the eluvial laterite-nickel ore may be mixed and fed into the autoclave, or may be fed into the autoclave separately. Further, preferably, in the acid leaching treatment, the ratio of acid to ore is 200 kg/t ore to 400 kg/t ore, preferably 250 kg/t ore to 350 kg/t ore, thereby helping to ensure the acid leaching efficiency and reduce improper waste of acid as much as possible. Further, preferably, the temperature for the acid leaching treatment is 200°C to 280°C, the time for the acid leaching treatment is 1 h to 8 h, the end point acidity of the acid leaching treatment is 5 g/L to30 g/L, and the pressure of the acid leaching treatment is 3 to 4 MPa. In addition, the temperature for the acid leaching treatment may be 90°C, 100°C, 120°C, 140°C, 150°C, 170°C, 190°C, 200°C, 210°C, 220°C, 230°C, 250°C, 255°C, 260°C, 265°C, 270°C, 275°C or 280°C, and it may also be any point value within the range of 90°C to 280°C; the time for the acid leaching treatment may be 0.5 h, 1 h, 1.5 h, 2 h, 2.5 h, 3 h, 3.5 h, 4 h, 4.5 h, 5 h, 5.5 h, 6 h, 6.5 h, 7 h, 7.5 h or 8 h, it may also be any point value within the range of 0.5 h to 8 h; the end point acidity of the acid leaching treatment may be 0.1 g/L, 0.5 g/L, 1 g/L, 2 g/L, 3 g/L, 4 g/L, 5 g/L, 6 g/L, 8 g/L, 10 g/L, 12 g/L, 15 g/L, 20 g/L, 22 g/L, 25 g/L, 28 g/L, 30 g/L, 35 g/L, 40 g/L, 45 g/L or 50 g/L, it may also be any point value within the range of 0.1 g/L to 50 g/L; the ratio of acid to ore may be 200 kg/t ore, 220 kg/t ore, 250 kg/t ore, 255 kg/t ore, 280 kg/t ore, 300 kg/t ore, 320 kg/t ore, 350 kg/t ore, or 400 kg/t ore.

In some embodiments of the present disclosure, in the above step S1, the inorganic acid is any one or more selected from a group consisting of sulfuric acid, hydrochloric acid and nitric acid.

When sulfuric acid, hydrochloric acid or nitric acid is used for acid leaching treatment, these inorganic acids have strong leaching ability, which is conducive to efficient extraction of nickel and cobalt from the laterite-nickel ore. Further, preferably, the inorganic acid is sulfuric acid, sulfate ions can further be recovered to realize recycling and reduce production costs.

In some embodiments of the present disclosure, in the above step S2, the liquid-solid separation may be a thickener separation or a filter press separation; and/or the countercurrent washing may be any one of series countercurrent washing by a multi-stage thickener, countercurrent washing by a filter press, and slurrying countercurrent washing.

The selection of liquid-solid separation and countercurrent washing method (a thickener, a filter press, series countercurrent washing by a multi-stage thickener, etc.) further improves the effect of the countercurrent washing, reduces the acidity in the leached slag, and recovers nickel and cobalt in the solution, thereby reducing waste of resource.

In some embodiments of the present disclosure, in the above step S6, the washing post-treatment process comprises a washing treatment with an acidic solution, a washing treatment with an alkaline solution and a washing treatment with a nickel and cobalt containing solution conducted in sequence.

The conditions of the above washing post-treatments and the washing treatment with an acidic solution, the washing treatment with an alkaline solution and the washing treatment with a nickel and cobalt containing solution steps conducted in sequence further optimize the purity of the nickel-cobalt hydroxide product, and the market competitiveness of the product obtained after the washing treatment with an acidic solution, the washing treatment with an alkaline solution and the washing treatment with a nickel and cobalt containing solution is improved by gradually removing impurities through.

In some embodiments of the present disclosure, in the above step S6, an acidic solution for the washing treatment with an acidic solution may be used in an amount of 0.01% to 100% of the solid mass of the nickel-cobalt hydroxide product; and/or the acidic solution has a mass concentration of 0.01 wt% to 5 wt%, and may be any one or more selected from a group consisting of sulfuric acid solution, hydrochloric acid solution, nitric acid solution, carbonic acid solution and an organic acid solution; and/or the washing treatment with an acidic solution may be conducted at a temperature of 25°C to 100°C for a period of 0.5 h to 8 h.

The preferred conditions of the above washing treatment with an acidic solution and the selection of the amount of the acidic solution increase the removal rate of the impurity magnesium in the nickel-cobalt hydroxide product. Reasonable concentration and amount of the acidic solution can effectively dissolve the impurity magnesium without excessively dissolving nickel and cobalt, thereby reducing the risk of quality reduction of the nickel-cobalt hydroxide product. Further, it is preferable that the mass of the acidic solution used in the washing treatment with an acidic solution is 0.1% to 5% of the solid mass of the nickel-cobalt hydroxide product, for example, it may be 0.1%, 0.5%, 1%, 1.5%, 2%, 2.5%, 3%, 3.5%, 4%, 4.5% or 5%, it may also be any point value within the range of 0.1% to 5%. In order to further improve the efficiency and effect of the washing treatment with an acidic solution, the temperature for the washing treatment with an acidic solution is preferably 50°C to80°C, and the time for the washing treatment with an acidic solution is 4 to 6 h. In addition, the temperature for the washing treatment with an acidic solution may be 25°C, 30°C, 40°C, 45°C, 50°C, 55°C, 60°C, 65°C, 70°C, 75°C, 80°C, 85°C, 90°C, 95°C or 100°C, and it may also be any point value within the range of 25°C to100°C; the time for the washing treatment with an acidic solution may be 0.5 h, 1 h, 1.5 h, 2 h, 2.5 h, 3 h, 3.5 h, 4 h, 4.5 h, 5 h, 5.5 h, 6 h, 6.5 h, 7 h, 7.5 h or 8 h, and it may also be any point value within the range of 0.5 h to 8 h; the mass concentration of the acidic solution may be 0.01 wt%, 0.02 wt%, 0.05 wt%, 0.08 wt%, 0.1 wt%, 0.3 wt%, 0.5 wt%, 1 wt%, 1.2 wt%, 1.5 wt%, 1.8 wt%, 2.0 wt%, 2.5 wt%, 3.0 wt%, 3.5 wt%, 4.0 wt%, 4.5 wt% or 5 wt%.

In some embodiments of the present disclosure, in the above step S6, the alkaline solution for the washing treatment with an alkaline solution may be used in a amount of 0.01% to 100% of the solid amount of the nickel-cobalt hydroxide product; and/or the alkaline solution has a mass concentration of 0.1 wt% to 40 wt%, and may be any one or more selected from a group consisting of sodium hydroxide solution, potassium hydroxide solution, aqueous ammonia and carbonate solution; and/or the washing treatment with an alkaline solution may be conducted at a temperature of 25°C to 100°C for a period of 0.5 h to 8 h.

The conditions of the washing treatment with an alkaline solution and the selection of the alkaline substance improve the removal rate of impurities manganese and sulfate ions in the nickel-cobalt hydroxide product. Specific alkaline conditions can promote the dissolution and separation of manganese without affecting the stability of nickel and cobalt, and improve the purity of the nickel-cobalt hydroxide product. Further, it is preferable that the amount of the alkaline solution used in the washing treatment with an alkaline solution may be 0.1% to 5% of the solid amount of the nickel-cobalt hydroxide product, for example, it may be 0.1%, 0.5%, 1%, 1.5%, 2%, 2.5%, 3%, 3.5%, 4%, 4.5% or 5%, it may also be any point value within the range of 0.1% to 5%. In order to further improve the efficiency and effect of the washing treatment with an alkaline solution, preferably, the temperature for the washing treatment with an alkaline solution is 50°C to 80°C, and the time for the washing treatment with an alkaline solution is 4 to 6 h. In addition, the temperature for the washing treatment with an alkaline solution may be 25°C, 30°C, 40°C, 45°C, 50°C, 55°C, 60°C, 65°C, 70°C, 75°C, 80°C, 85°C, 90°C, 95°C or 100°C, and it may also be any point value within the range of 25°C to 100°C; the time for the washing treatment with an alkaline solution may be 0.5 h, 1 h, 1.5 h, 2 h, 2.5 h, 3 h, 3.5 h, 4 h, 4.5 h, 5 h, 5.5 h, 6 h, 6.5 h, 7 h, 7.5 h or 8 h, and it may also be any point value within the range of 0.5 h to 8 h; the mass concentration of the alkaline solution may be 0.1 wt%, 0.5 wt%, 1 wt%, 3 wt%, 5 wt%, 10 wt%, 15 wt%, 20 wt%, 25 wt%, 30 wt%, 35 wt%, or 40 wt%.

In some embodiments of the present disclosure, in the above step S6, the nickel and cobalt containing solution for the washing treatment with a nickel-cobalt-containing solution may be used in an amount of 0.01% to 100% of a solid amount of the nickel-cobalt hydroxide product; and/or the nickel and cobalt containing solution has a mass concentration of nickel and cobalt of 0.1 g/L to 100 g/L, and may be any one or more selected from a group consisting of the leachate, the solution before iron and aluminum removal, the solution with iron and aluminum removed, and a self-formulated nickel and cobalt solution; and/or the washing treatment with a nickel-cobalt-containing solution is conducted at a temperature of 25°C to 100°C for a period of 0.5 h to 8 h.

The conditions of the washing treatment with a nickel and cobalt containing solution and the selection of the content of nickel and cobalt in the nickel and cobalt containing solution help to supplement the loss of nickel and cobalt during the washing process, and meanwhile, the impurities such as magnesium ions and manganese ions are further removed by the washing treatment with a nickel and cobalt containing solution, ensuring the quality of the nickel-cobalt hydroxide product. The use of the leachate, the solution before iron and aluminum removal, and the solution with iron and aluminum removed as the source of the nickel and cobalt containing solution is helpful to improve the recycling of these solutions, reduce the loss of nickel and cobalt, and improve the overall recovery rate of nickel and cobalt. Further, it is preferable that the amount of the nickel and cobalt containing solution used in the washing treatment with a nickel and cobalt containing solution is 0.1% to 5% of the solid amount of the nickel-cobalt hydroxide product, for example, it may be 0.1%, 0.5%, 1%, 1.5%, 2%, 2.5%, 3%, 3.5%, 4%, 4.5% or 5%, it may also be any point value within the range of 0.1% to5%. In order to further improve the efficiency and effect of the washing treatment with a nickel and cobalt containing solution, preferably, the temperature for the washing treatment with a nickel and cobalt containing solution is 50°C to 80°C, and the time for the washing treatment with a nickel and cobalt containing solution is 4 to 6 h. In addition, the temperature for the washing treatment with a nickel and cobalt containing solution may be 25°C, 30°C, 40°C, 45°C, 50°C, 55°C, 60°C, 65°C, 70°C, 75°C, 80°C, 85°C, 90°C, 95°C or 100°C, and it may also be any point value within the range of 25°C to 100°C; the time for the washing treatment with a nickel and cobalt containing solution may be 0.5 h, 1 h, 1.5 h, 2 h, 2.5 h, 3 h, 3.5 h, 4 h, 4.5 h, 5 h, 5.5 h, 6 h, 6.5 h, 7 h, 7.5 h or 8 h, and it may also be any point value within the range of 0.5 h to8 h; the mass concentration of the nickel and cobalt containing solution may be 0.1 g/L, 1 g/L, 3 g/L, 5 g/L, 10 g/L, 15 g/L, 20 g/L, 25 g/L, 30 g/L, 35 g/L, 40 g/L, 45 g/L, 50 g/L, 55 g/L, 60 g/L, 65 g/L, 70 g/L, 75 g/L, 80 g/L, 85 g/L, 90 g/L, 95 g/L or 100 g/L.

In some embodiments of the present disclosure, the above wet treatment process further comprises: returning a portion of the overflow to the countercurrent washing step; conducting a neutralization treatment for a remaining portion of the overflow with the leached slag to obtain a tailings slurry; the temperature for the neutralization treatment may be 25°C to 100°C, and/or the time for the neutralization treatment may be 0.5 h to 8 h; and/or an end point pH of the neutralization treatment is 7.0 to 9.0.

The recycling of the overflow (returning to countercurrent washing) and the neutralization treatment of the remaining portion (neutralization with the leached slag) realize the reuse of resources, reduce the waste discharge, and simultaneously improve the environmental friendliness and resource utilization of the tailings slurry through the neutralization treatment. Further, the temperature for the neutralization treatment is preferably 50°C to 80°C, and the time for the neutralization treatment is preferably 4 h to 6 h. In addition, the temperature for the neutralization treatment may be 25°C, 30°C, 40°C, 45°C, 50°C, 55°C, 60°C, 65°C, 70°C, 75°C, 80°C, 85°C, 90°C, 95°C or 100°C, and it may also be any point value within the range of 25°C to 100°C; the time for the neutralization treatment may be 0.5 h, 1 h, 1.5 h, 2 h, 2.5 h, 3 h, 3.5 h, 4 h, 4.5 h, 5 h, 5.5 h, 6 h, 6.5 h, 7 h, 7.5 h or 8 h, and it may also be any point value within the range of 0.5 h to 8 h; the end point pH of the neutralization treatment may be 7.0, 7.5, 8.0, 8.5, or 9.0, and it may also be any point value within the range of 7.0 to 9.0.

In some embodiments of the present disclosure, a second oxidant and a second neutralizer are added during the above neutralization treatment, and the second oxidant may be any one or more selected from a group consisting of a mixed gas of oxygen and sulfur dioxide, oxygen, ozone, a persulfate, hydrogen peroxide, a nitrite and a perchlorate; and the second neutralizer may be any one or more selected from a group consisting of sodium carbonate, sodium bicarbonate, potassium carbonate, potassium bicarbonate, magnesium carbonate, magnesium bicarbonate, ammonium carbonate, ammonium bicarbonate, calcium oxide, magnesium oxide, sodium hydroxide, potassium hydroxide, aqueous ammonia, calcium hydroxide, magnesium hydroxide, calcium carbonate and calcium bicarbonate.

The use of the second oxidant and the second neutralizer in the neutralization treatment further optimizes the tailings treatment, ensures the complete precipitation of residual metals and reduces environmental pollution, and at the same time, the resource utilization of the tailings is realized by selecting appropriate second oxidant and second neutralizer.

The above-mentioned precipitation method disclosed in the present disclosure is applied for a limonite-type laterite-nickel ore, and preferably, in the limonite-type laterite-nickel ore, a mass content of nickel is 0.8% to 1.8%, a mass content of cobalt is 0.01% to 0.5%, a mass content of iron is 40% to 50%, a mass content of magnesium is 1% to 10%, a mass content of manganese is 0.1% to 1.5%, and a mass content of scandium is 10 to 80 ppm.

Further, preferably, the nickel-cobalt hydroxide product obtained by the above wet treatment process for laterite-nickel ore has a mass content of nickel ranging from 39% to 45.5%, a mass content of cobalt ranging from 3.1% to 4.6%, a mass content of scandium ranging from 1100 ppm to 1400 ppm, a mass content of magnesium ranging from 0.15% to 0.25%, and a mass content of manganese ranging from 0.4% to 0.9%, demonstrating excellent quality. The recovery rate of nickel, cobalt and scandium in the whole process is 88% to 95.5%, 85% to 95%, and 83% to 96%, respectively. It can be seen that the advantage of the wet treatment process for laterite-nickel ore in the present disclosure lies not only in shortening the complex process of the traditional two-stage iron and aluminum removal and two-stage nickel-cobalt precipitation, reducing the production cost and energy consumption, but also in improving the recovery rate of nickel and cobalt and the overall recovery rate of scandium, significantly reducing the contents of magnesium and manganese in the nickel-cobalt hydroxide product, thereby greatly improving the quality of the mixed nickel-cobalt oxide product.

The present disclosure is further described in detail below with reference to specific examples, and these examples should not be construed as limiting the claimed scope of the present disclosure.

### Example 1

Limonite-type laterite-nickel ore was used as the raw material, wherein a mass content of nickel was 1.2%, a mass content of cobalt was 0.12%, a mass content of iron was 45%, a mass content of magnesium was 2%, a mass content of manganese was 0.5%, and a mass content of scandium was 40 ppm. Referring to the flowchart of the wet treatment process for laterite-nickel ore shown in FIG. 1, the limonite-type laterite-nickel ore was subjected to a high-pressure acid leaching treatment with an acid/ore ratio of 250 kg/t ore at 255°C for 1 h, and the iron and aluminum slag was injected. The end point acidity was 5 g/L, and the leached ore slurry was obtained.

The leached ore slurry was subjected to a liquid-solid separation, and a countercurrent washing on a seven-stage CCD thickener to obtain a washed slurry and a leached slag. Then, limestone and oxygen were used to conduct an iron and aluminum removal treatment on the washed slurry at a temperature of 40°C for 3 h, the amount of oxygen added was 5.0 times the chemical reaction stoichiometric ratio of ferrous iron in the washed slurry. The end point pH of the iron and aluminum removal treatment was controlled to 5.0, to obtain a solution with iron and aluminum removed and an iron and aluminum slag. In the iron and aluminum slag, a mass content of nickel was 3%, and a mass content of cobalt was 0.5%.

The obtained iron and aluminum slag was returned to the above high-pressure acid leaching treatment step. Magnesium oxide was added to the solution with iron and aluminum removed to conduct a nickel-cobalt precipitation treatment at 40°C for 3 h. The end point pH of the nickel-cobalt precipitation treatment was controlled to 8.5, to obtain a precipitated slurry.

The precipitated slurry was continuously subjected to a thickening separation treatment to obtain an underflow and an overflow;
The underflow was subjected to washing post-treatment including a washing treatment with an acidic solution, a washing treatment with an alkaline solution and a washing treatment with a nickel and cobalt containing solution in sequence by using 0.5 wt% sulfuric acid solution, 5 wt% sodium hydroxide solution and nickel and cobalt containing solution with a mass concentration of 3 g/L respectively to obtain a nickel-cobalt hydroxide product. Wherein the masses of the sulfuric acid solution, the sodium hydroxide solution and the nickel and cobalt containing solution were each independently 5% of the solid mass of the nickel-cobalt hydroxide product, for the washing treatment with an acidic solution, the washing treatment with an alkaline solution and the washing treatment with a nickel and cobalt containing solution, the temperature was each independently 60°C, and the time was each independently 3 h.

After testing, in the nickel-cobalt hydroxide, the mass content of nickel was 45%, the mass content of cobalt was 4%, the mass content of scandium was 1400 ppm, the mass content of magnesium was 0.2%, the mass content of manganese was 0.5%, indicating excellent quality. In the overall process, the recovery rate of nickel was 95%, the recovery rate of cobalt was 94.5%, and the recovery rate of scandium was 96%.

### Example 2

The nickel-cobalt hydroxide product was obtained in the same manner as in Example 1, except that the end point pH of the iron and aluminum removal treatment was controlled to 4.5, to obtain a solution with iron and aluminum removed and an iron and aluminum slag having a mass content of nickel of 2.5%, and a mass content of cobalt of 0.3%. After testing, in the nickel-cobalt hydroxide, the mass content of nickel was 44%, the mass content of cobalt was 3.7%, the mass content of scandium was 1300 ppm, the mass content of magnesium was 0.2%, and the mass content of manganese was 0.5%, indicating excellent quality. In the overall process, the recovery rate of nickel was 95%, the recovery rate of cobalt was 94.5%, and the recovery rate of scandium was 96%.

### Example 3

The nickel-cobalt hydroxide product was obtained in the same manner as in Example 1, except that the end point pH of the iron and aluminum removal treatment was controlled to 5.5, to obtain a solution with iron and aluminum removed and an iron and aluminum slag having a mass content of nickel of 8% and a mass content of cobalt of 0.9%. After testing, in the nickel-cobalt hydroxide, the mass content of nickel was 45%, the mass content of cobalt was 4%, the mass content of scandium was 1400 ppm, and the mass content of magnesium was 0.2%, the mass content of manganese was 0.5%, indicating excellent quality. In the overall process, the recovery rate of nickel was 95%, the recovery rate of cobalt was 94.5%, and the recovery rate of scandium was 96%.

### Example 4

The nickel-cobalt hydroxide product was obtained in the same manner as in Example 1, except that the end point pH of the iron and aluminum removal treatment was controlled to 3.8, to obtain a solution with iron and aluminum removed and an iron and aluminum slag having a content of nickel of 3% and a mass content of cobalt of 0.3%. After testing, in the nickel-cobalt hydroxide, the mass content of nickel was 42%, the mass content of cobalt was 3.1%, the mass content of scandium was 1100 ppm, the mass content of magnesium was 0.2%, and the mass content of manganese was 0.5%, indicating excellent quality. In the overall process, the recovery rate of nickel was 95%, the recovery rate of cobalt was 94.5%, and the recovery rate of scandium was 96%.

### Example 5

The nickel-cobalt hydroxide product was obtained in the same manner as in Example 1, except that the iron and aluminum removal treatment was conducted at a the temperature of 90°C, to obtain a solution with iron and aluminum removed and an iron and aluminum slag having amass content of nickel of 2.8% and a mass content of cobalt of 0.45%. After testing, in the nickel-cobalt hydroxide, the mass content of nickel was 45%, the mass content of cobalt was 4%, the mass content of scandium was 1400 ppm, the mass content of magnesium was 0.2%, and the mass content of manganese was 0.5%, indicating excellent quality. In the overall process, the recovery rate of nickel was 95%, the recovery rate of cobalt was 94.5%, and the recovery rate of scandium was 96%.

### Example 6

The nickel-cobalt hydroxide product was obtained in the same manner as in Example 1, except that the iron and aluminum removal treatment was conducted at a temperature of 25°C, to obtain a solution with iron and aluminum removed and an iron and aluminum slag having a mass content of nickel of 3.6% and a mass content of cobalt of 0.55%. After testing, in the nickel-cobalt hydroxide, the mass content of nickel was 45%, the mass content of cobalt was 4%, the mass content of scandium was 1400 ppm, the mass content of magnesium was 0.2%, and the mass content of manganese was 0.5%, indicating excellent quality. In the overall process, the recovery rate of nickel was 95%, the recovery rate of cobalt was 94.5%, and the recovery rate of scandium was 96%.

### Example 7

The nickel-cobalt hydroxide product was obtained in the same manner as in Example 1, except that the iron and aluminum removal treatment was conducted for 6 h, to obtain a solution with iron and aluminum removed and an iron and aluminum slag having a mass content of nickel of 3.1% and a mass content of cobalt of 0.55%. After testing, in the nickel-cobalt hydroxide, the mass content of nickel was 45%, the mass content of cobalt was 4%, the mass content of scandium was 1400 ppm, the mass content of magnesium was 0.2%, and the mass content of manganese was 0.5%, indicating excellent quality. In the overall process, the recovery rate of nickel was 95%, the recovery rate of cobalt was 94.5%, and the recovery rate of scandium was 96%.

### Example 8

The nickel-cobalt hydroxide product was obtained in the same manner as in Example 1, except that the iron and aluminum removal treatment was conducted for 4 h, to obtain a solution with iron and aluminum removed and an iron and aluminum slag having a mass content of nickel of 3.05% and a mass content of cobalt of 0.52%. After testing, in the nickel-cobalt hydroxide, the mass content of nickel was 45%, the mass content of cobalt was 4%, the mass content of scandium was 1400 ppm, the mass content of magnesium was 0.2%, and the mass content of manganese was 0.5%, indicating excellent quality. In the overall process, the recovery rate of nickel was 95%, the recovery rate of cobalt was 94.5%, and the recovery rate of scandium was 96%.

### Example 9

The nickel-cobalt hydroxide product was obtained in the same manner as in Example 1, except that oxygen was added in an amount of 10.0 times the chemical reaction stoichiometric ratio of ferrous iron in the washed slurry, to obtain a solution with iron and aluminum removed and an iron and aluminum slag having a mass content of nickel of 2.95% and a mass content of cobalt of 0.45%,. After testing, in the nickel-cobalt hydroxide, the mass content of nickel was 45%, the mass content of cobalt was 4%, the mass content of scandium was 1400 ppm, the mass content of magnesium was 0.2%, and the mass content of manganese was 0.5%, indicating excellent quality. In the overall process, the recovery rate of nickel was 95%, the recovery rate of cobalt was 94.5%, and the recovery rate of scandium was 96%.

### Example 10

The nickel-cobalt hydroxide product was obtained in the same manner as in Example 1, except that oxygen was added in an amount of 1.0 times the chemical reaction stoichiometric ratio of ferrous iron in the washed slurry, to obtain a solution with iron and aluminum removed and an iron and aluminum slag having a mass content of nickel of3.2% and a mass content of cobalt of0.52%. After testing, in the nickel-cobalt hydroxide, the mass content of nickel was 40.5%, the mass content of cobalt was 3.1%, the mass content of scandium was 1100 ppm, the mass content of magnesium was 0.2%, and the mass content of manganese was 0.5%, indicating excellent quality. In the overall process, the recovery rate of nickel was 95%, the recovery rate of cobalt was 94.5%, and the recovery rate of scandium was 96%.

### Example 11

The nickel-cobalt hydroxide product was obtained in the same manner as in Example 1, except that potassium persulfate and potassium carbonate were used as the first oxidant and the first neutralizer, respectively, to obtain a solution with iron and aluminum removed and an iron and aluminum slag having a mass content of nickel of 2.95% and a mass content of cobalt of 0.45%. After testing, in the nickel-cobalt hydroxide, the mass content of nickel was 45%, the mass content of cobalt was 4%, the mass content of scandium was 1400 ppm, the mass content of magnesium was 0.2%, and the mass content of manganese was 0.5%, indicating excellent quality. In the overall process, the recovery rate of nickel was 95%, the recovery rate of cobalt was 94.5%, and the recovery rate of scandium was 96%.

### Example 12

The nickel-cobalt hydroxide product was obtained in the same manner as in Example 1, except that the end point pH of the nickel-cobalt precipitation treatment was controlled to 9.0, to obtain a precipitated slurry. After testing, in the nickel-cobalt hydroxide, the mass content of nickel was 39%, the mass content of cobalt was 3.7%, the mass content of scandium was 1100 ppm, the mass content of magnesium was 0.9%, and the mass content of manganese was 0.9%, indicating excellent quality. In the overall process, the recovery rate of nickel was 95%, the recovery rate of cobalt was 94.5%, and the recovery rate of scandium was 96%.

### Example 13

The nickel-cobalt hydroxide product was obtained in the same manner as in Example 1, except that the end point pH of the nickel-cobalt precipitation treatment was controlled to 7.0, to obtain a precipitated slurry. After testing, in the nickel-cobalt hydroxide, the mass content of nickel was 45%, the mass content of cobalt was 4%, the mass content of scandium was 1400 ppm, the mass content of magnesium was 0.2%, and the mass content of manganese was 0.5%, indicating excellent quality. In the overall process, the recovery rate of nickel was 88%, the recovery rate of cobalt was 85%, and the recovery rate of scandium was 83%.

### Example 14

The nickel-cobalt hydroxide product was obtained in the same manner as in Example 1, except that the nickel-cobalt precipitation treatment was conducted at a temperature of 90°C, to obtain a precipitated slurry. After testing, in the nickel-cobalt hydroxide, the mass content of nickel was 45%, the mass content of cobalt was 4%, the mass content of scandium was 1400 ppm, the mass content of magnesium was 0.15%, and the mass content of manganese was 0.4%, indicating excellent quality. In the overall process, the recovery rate of nickel was 95%, the recovery rate of cobalt was 94.5%, and the recovery rate of scandium was 96%.

### Example 15

The nickel-cobalt hydroxide product was obtained in the same manner as in Example 1, except that the nickel-cobalt precipitation treatment was conducted at a temperature of 25°C, to obtain a precipitated slurry. After testing, in the nickel-cobalt hydroxide, the mass content of nickel was 45%, the mass content of cobalt was 4%, the mass content of scandium was 1400 ppm, the mass content of magnesium was 0.25%, and the mass content of manganese was 0.55%, indicating excellent quality. In the overall process, the recovery rate of nickel was 95%, the recovery rate of cobalt was 94.5%, and the recovery rate of scandium was 96%.

### Example 16

The nickel-cobalt hydroxide product was obtained in the same manner as in Example 1, except that the nickel-cobalt precipitation treatment was conducted for 6 h, to obtain a precipitated slurry. After testing, in the nickel-cobalt hydroxide, the mass content of nickel was 45%, the mass content of cobalt was 4%, the mass content of scandium was 1400 ppm, the mass content of magnesium was 0.15%, and the mass content of manganese was 0.45%, indicating excellent quality. In the overall process, the recovery rate of nickel was 95%, the recovery rate of cobalt was 94.5%, and the recovery rate of scandium was 96%.

### Example 17

The nickel-cobalt hydroxide product was obtained in the same manner as in Example 1, except that the nickel-cobalt precipitation treatment was conducted for 4 h, to obtain a precipitated slurry. After testing, in the nickel-cobalt hydroxide, the mass content of nickel was 45%, the mass content of cobalt was 4%, the mass content of scandium was 1400 ppm, the mass content of magnesium was 0.17%, and the mass content of manganese was 0.48%, indicating excellent quality. In the overall process, the recovery rate of nickel was 95%, the recovery rate of cobalt was 94.5%, and the recovery rate of scandium was 96%.

### Example 18

The nickel-cobalt hydroxide product was obtained in the same manner as in Example 1, except that:
A limonite-type laterite-nickel ore was used as the raw material, wherein a mass content of nickel was 0.9%, a mass content of cobalt was 0.1%, a mass content of iron was 45%, a mass content of scandium was 60 ppm, a mass content of magnesium was 1.5%, and a mass content of manganese was 0.8%. The limonite-type laterite-nickel ore was conducted high pressure acid leaching treatment with a acid/ore ratio of 250 kg/t ore at 255°C for 1 h. and the iron and aluminum slag was injected. The end point acidity was 5 g/L, and the leached ore slurry was obtained.

The leached ore slurry was subjected to a liquid-solid separation, and a countercurrent washing on a seven-stage CCD thickener to obtain a washed slurry and a leached slag. Then, limestone and potassium persulfate were used to conduct an iron and aluminum removal treatment on the washed slurry at 40°C for 3 h, the amount of potassium persulfate added was 5.0 times the chemical reaction stoichiometric ratio of ferrous iron in the washed slurry. The end point pH of the iron and aluminum removal treatment was controlled to 5.0, to obtain a solution with iron and aluminum removed and an iron and aluminum slag. In the iron and aluminum slag, a mass content of nickel was 3%, and a mass content of cobalt was 0.5%.

The obtained iron and aluminum slag was returned to the above high-pressure acid leaching treatment step. 3 g/L magnesium-containing solution was reacted with magnesium oxide to produce active magnesium hydroxide, and the active magnesium hydroxide was added to the solution with iron and aluminum removed to conduct a nickel-cobalt precipitation treatment at 40°C for 3 h. The pH value of the end point of the nickel-cobalt precipitation treatment was controlled to 8.5, to obtain a precipitated slurry. After testing, in the nickel-cobalt hydroxide, the mass content of nickel was 45%, the mass content of cobalt was 4%, the mass content of scandium was 1400 ppm, the mass content of magnesium was 0.2%, the mass content of manganese was 0.5%, indicating excellent quality. In the overall process, the recovery rate of nickel was 95%, the recovery rate of cobalt was 94.5%, and the recovery rate of scandium was 96%.

### Example 19

The nickel-cobalt hydroxide product was obtained in the same manner as in Example 1, except that: A limonite-type laterite-nickel ore was used as the raw material, wherein the mass content of nickel was1.2%, the mass content of iron was 45%, and the mass content of magnesium was 2%.The limonite-type laterite-nickel ore was conducted a high pressure acid leaching treatment with an acid/ore ratio of 350 kg/t ore at 280°C for 8 h, and the iron and aluminum slag was injected. The acidity of the end point was 30 g/L, and the leached ore slurry was obtained. After testing, in the nickel-cobalt hydroxide, the mass content of nickel was 45%, the mass content of cobalt was 4%, the mass content of scandium was 1400 ppm, the mass content of magnesium was 0.2%, the mass content of manganese was 0.5%, indicating excellent quality. In the overall process, the recovery rate of nickel was 95.5%, the recovery rate of cobalt was 95%, and the recovery rate of scandium was 96%.

### Example 20

The nickel-cobalt hydroxide product was obtained in the same manner as in Example 1, except that the underflow was subjected to acidic solution washing treatment, alkaline solution washing treatment and nickel and cobalt containing solution washing treatment in sequence by using 5 wt% sulfuric acid solution, 40 wt% sodium hydroxide solution and nickel and cobalt containing solution with a mass concentration of 50 g/L respectively, wherein the amount of the sulfuric acid solution, the sodium hydroxide solution and the nickel and cobalt containing solution was each independently 1% of the solid mass of the nickel-cobalt hydroxide product, the temperature for the washing treatment with an acidic solution, the washing treatment with an alkaline solution and the washing treatment with a nickel and cobalt containing solution was each independently 80°C, and the time was each independently 6 h. After testing, in the nickel-cobalt hydroxide, the mass content of nickel was 45.5%, the mass content of cobalt was 4.6%, the mass content of scandium was 1400 ppm, the mass content of magnesium was 0.17%, the mass content of manganese was 0.45%, indicating excellent quality. In the overall process, the recovery rate of nickel was 95%, the recovery rate of cobalt was 94.5%, and the recovery rate of scandium was 96%.

### Example 21

The nickel-cobalt hydroxide product was obtained in the same manner as in Example 1, except that the underflow was subjected to a washing treatment with an acidic solution, a washing treatment with an alkaline solution and a washing treatment with a nickel and cobalt containing solution in sequence by using 0.4 wt% sulfuric acid solution, 4 wt% sodium hydroxide solution and nickel and cobalt containing solution with a mass concentration of 2 g/L respectively, wherein the amount of the sulfuric acid solution, the sodium hydroxide solution and the nickel and cobalt containing solution was each independently 3% of the solid mass of the nickel-cobalt hydroxide product, the temperature for the washing treatment with an acidic solution, the washing treatment with an alkaline solution and the washing treatment with a nickel and cobalt containing solution was each independently 50°C, and the time was each independently 4 h. After testing, in the nickel-cobalt hydroxide, the mass content of nickel was 44.5%, the mass content of cobalt was 3.8%, the mass content of scandium was 1400 ppm, the mass content of magnesium was 0.25%, the mass content of manganese was 0.53%, indicating excellent quality. In the overall process, the recovery rate of nickel was 95%, the recovery rate of cobalt was 94.5%, and the recovery rate of scandium was 96%.

### Comparative Example 1

A limonite-type laterite-nickel ore was used as the raw material, wherein the mass content of nickel was 1.2%, the mass content of iron was 45%, and the mass content of magnesium was 2%. The limonite-type laterite-nickel ore was subjected to a high pressure acid leaching treatment with an acid/ore ratio of 250 kg/t ore at 255°C for 1 h, the iron and aluminum slag was injected. The end point acidity was 30 g/L, and the leached ore slurry was obtained.

The leached ore slurry was sequentially subjected to a countercurrent washing on a seven-stage CCD thickener, a first-stage iron and aluminum removal treatment, a second-stage iron and aluminum removal treatment, a first-stage nickel-cobalt precipitation treatment, a second-stage nickel-cobalt precipitation treatment, and washing treatment to obtain a nickel-cobalt hydroxide. Wherein the first-stage iron and aluminum removal treatment was conducted by using limestone at 80°C for 4 h, and the end point pH was controlled to 3.8; the second-stage iron and aluminum removal treatment was conducted by using limestone at 70°C for 4 h, and the end point pH was controlled to 4.8; the first-stage nickel-cobalt precipitation treatment was conducted by using sodium hydroxide at 60°C for 3 h, and the end point pH was controlled to 7.8; and the second-stage nickel-cobalt precipitation treatment was conducted by using sodium hydroxide at 50°C for 3 h, and the end point pH was controlled to 8.4.

After testing, in the nickel-cobalt hydroxide, the mass content of nickel was 39%, the mass content of cobalt was 3.5%, the mass content of scandium was 300 ppm, the mass content of magnesium was 1.5%, and the mass content of manganese was 6%, and the quality is excellent. In the overall process, the recovery rate of nickel was 91%, the recovery rate of cobalt was 90%, and the recovery rate of scandium was 25%.

From the above description, it can be seen that the embodiments of the present disclosure achieve the following technical effects.

The core of the present disclosure is to provide a short wet treatment process forlaterite-nickel ore, in which a washed slurry and a leached slag are obtained by an acid leaching treatment, a liquid-solid separation and a countercurrent washing, the washed slurry is subjected to an one-stage iron and aluminum removal to obtain a solution with iron and aluminum removed and an iron and aluminum slag, the solution with iron and aluminum removed is subjected to an one-stage nickel-cobalt precipitation and post-treatment steps, and the iron and aluminum slag is returned to the step of acid leaching treatment, thereby realizing efficient enrichment of nickel and cobalt and quality improvement of a nickel-cobalt hydroxide product. The present disclosure has the advantage that the complex process of the traditional two-stage iron and aluminum removal and two-stage nickel-cobalt precipitation is shorted, the production cost and energy consumption is reduced, and simultaneously the recovery rate of nickel and cobalt, the overall recovery rate of scandium, and the quality of nickel-cobalt oxide products are improved.

The above are only the preferred embodiments of this disclosure and are not intended to limit this disclosure. For those skilled in the art, this disclosure may have various modifications and changes. Any modification, equivalent replacement, or improvement made without departing from the spirit and principle of the present disclosure should fall within the protection scope of the present disclosure.

## Claims

1. A wet treatment process for laterite-nickel ore, the laterite-nickel ore being one or more selected from a group consisting of alimonite-type laterite-nickel ore and an eluviallaterite-nickel ore, **characterized in that**: the wet treatment process comprises:
S1, conducting an acid leaching treatment on the laterite-nickel ore with an inorganic acid to obtain a leached ore slurry;
S2, sequentially conducting a liquid-solid separation and a countercurrent washing on the leached ore slurry to obtain a washed slurry and a leached slag;
S3, adding a first oxidant and a first neutralizer to the washed slurry for conducting an iron and aluminum removal treatment to obtain a solution with iron and aluminum removed and an iron and aluminum slag;
S4, conducting a nickel-cobalt precipitation treatment on the solution with iron and aluminum removed to obtain a precipitated slurry;
S5, continuously conducting a thickening separation treatment on the precipitated slurry to obtain an underflow and an overflow; and
S6, conducting a washing post-treatment on the underflow in sequence to obtain a nickel-cobalt hydroxide product;
wherein the iron and aluminum slag is returned to the acid leaching treatment.

2. The wet treatment process for laterite-nickel ore according to claim 1, **characterized in that**: in S3, the iron and aluminum removal treatment is conducted at a temperature of 25°C to 100°C for a period of 0.5 h to 8 h; and/or the iron and aluminum removal treatment has an end point pH of 3.8 to 5.5; and/or the iron and aluminum slag has a mass content of nickel of 1% to 8%, and a mass content of cobalt of 0.1% to 0.9%.

3. The wet treatment process for laterite-nickel ore according to claim 1, **characterized in that**: in S3, the first oxidant is any one or more selected from a group consisting of a mixed gas of oxygen and sulfur dioxide, oxygen, ozone, a persulfate, hydrogen peroxide, a nitrite, and a perchlorate, and/or an addition amount of the first oxidant is 1.0 to 10.0 times a chemical reaction stoichiometric ratio of ferrous iron in the washed slurry.

4. The wet treatment process for laterite-nickel ore according to any one of claims 1 to 3, **characterized in that**: in S3, the first neutralizer is any one or more selected from a group consisting of sodium carbonate, sodium bicarbonate, potassium carbonate, potassium bicarbonate, magnesium carbonate, magnesium bicarbonate, ammonium carbonate, ammonium bicarbonate, calcium oxide, magnesium oxide, sodium hydroxide, potassium hydroxide, aqueous ammonia, calcium hydroxide, magnesium hydroxide, calcium carbonate, calcium bicarbonate, limestone, magnesia, magnesite, dolomite, and marble.

5. The wet treatment process for laterite-nickel ore according to any one of claims 1 to 3, **characterized in that**: in S4, the nickel-cobalt precipitation treatment is conducted at a temperature of 25°C to 100°C for a period of 0.5 h to 8 h; and/or the nickel-cobalt precipitation treatment has an end point pH of 7.0 to 9.0.

6. The wet treatment process for laterite-nickel ore according to any one of claims 1 to 3, **characterized in that**: in S4, the nickel-cobalt precipitation treatment comprises:
directly adding a precipitant to the solution with iron and aluminum removed to conduct the nickel-cobalt precipitation treatment; or
reacting a magnesium-containing solution with a precipitant to produce active magnesium hydroxide, and then adding the active magnesium hydroxide to the solution with iron and aluminum removed to conduct the nickel-cobalt precipitation treatment; and/or
the precipitant is any one or more selected from a group consisting of sodium carbonate, sodium bicarbonate, potassium carbonate, potassium bicarbonate, magnesium carbonate, magnesium bicarbonate, ammonium carbonate, ammonium bicarbonate, calcium oxide, magnesium oxide, sodium hydroxide, potassium hydroxide, aqueous ammonia, calcium hydroxide, magnesium hydroxide, calcium carbonate and calcium bicarbonate.

7. The wet treatment process for laterite-nickel ore according to any one of claims 1 to 3, **characterized in that**: in S1, the acid leaching treatment is conducted at a temperature of 90°C to 280°C for a period of 0.5 h to 8 h; and/or the acid leaching treatment has an end point acidity of 0.1 g/L to 50 g/L; and/or the acid leaching treatment is conducted at a pressure of 1 MPa to 4 MPa.

8. The wet treatment process for laterite-nickel ore according to any one of claims 1 to 3, **characterized in that**: in S1, the inorganic acid is any one or more selected from a group consisting of sulfuric acid, hydrochloric acid and nitric acid.

9. The wet treatment process for laterite-nickel ore according to any one of claims 1 to 3, **characterized in that**: in S2, the liquid-solid separation is any one selected from a group consisting of a thickener separation and a filter press separation; and/or the countercurrent washing is any one selected from a group consisting of series countercurrent washing by a multi-stage thickener, countercurrent washing by a filter press, and slurrying countercurrent washing.

10. The wet treatment process for laterite-nickel ore according to any one of claims 1 to 3, **characterized in that**: in S6, the washing post-treatment comprises a washing treatment with an acidic solution, a washing treatment with an alkaline solution and a washing treatment with a nickel and cobalt containing solution conducted in sequence.

11. The wet treatment process for laterite-nickel ore according to claim 10, **characterized in that**: in S6, a mass of an acidic solution for the washing treatment with an acidic solution is 0.01% to 100% of a solid mass of the nickel-cobalt hydroxide product; and/or a mass concentration of the acidic solution is 0.01 to 5 wt%, and the acidic solution is any one or more selected from a group consisting of sulfuric acid solution, hydrochloric acid solution, nitric acid solution, carbonic acid solution and an organic acid solution; and/or the washing treatment with an acidic solution is conducted at a temperature of 25°C to100°C for a period of 0.5 h to 8 h.

12. The wet treatment process for laterite-nickel ore according to claim 10, **characterized in that**: in S6, a mass of an alkaline solution for the washing treatment with an alkaline solution is 0.01% to 100% of a solid mass of the nickel-cobalt hydroxide product; and/or a mass concentration of the alkaline solution is 0.1 to 40 wt%, and the alkaline solution is any one or more selected from a group consisting of sodium hydroxide solution, potassium hydroxide solution, aqueous ammonia and carbonate solution; and/or the washing treatment with an alkaline solution is conducted at a temperature of 25°C to 100°C for a period of 0.5 h to 8 h.

13. The wet treatment process for laterite-nickel ore according to claim 10, **characterized in that**: in S6, a mass of the nickel and cobalt containing solution for the washing treatment with a nickel and cobalt containing solution is 0.01% to 100% of a solid mass of the nickel-cobalt hydroxide product; and/or a mass concentration of nickel and cobalt in the nickel and cobalt containing solution is 0.1 g/L to 100 g/L, and the nickel and cobalt containing solution is any one or more selected from a group consisting of the leachate, the solution before iron and aluminum removal, the solution with iron and aluminum removed, and a self-formulated nickel and cobalt solution; and/or the washing treatment with a nickel and cobalt containing solution is conducted at a temperature of 25°C to 100°C for a period of 0.5 h to 8 h.

14. The wet treatment process for laterite-nickel ore according to any one of claims 1 to 3, **characterized in that**: the wet treatment process further comprises:
returning a portion of the overflow to the countercurrent washing;
conducting a neutralization treatment for the remaining portion of the overflow with the leached slag to obtain a tailings slurry;
the neutralization treatment is conducted at a temperature of 25°C to 100°C, and/or the neutralization treatment is conducted for a period of 0.5 h to 8 h; and/or the neutralization treatment has an end point pH of 7.0 to 9.0.

15. The wet treatment process for laterite-nickel ore according to claim 14, **characterized in that**: a second oxidant and a second neutralizer are added during the neutralization treatment, and the second oxidant is any one or more selected from a group consisting of a mixed gas of oxygen and sulfur dioxide, oxygen, ozone, a persulfate, hydrogen peroxide, a nitrite and a perchlorate; and/or the second neutralizer is selected from any one or more of sodium carbonate, sodium bicarbonate, potassium carbonate, potassium bicarbonate, magnesium carbonate, magnesium bicarbonate, ammonium carbonate, ammonium bicarbonate, calcium oxide, magnesium oxide, sodium hydroxide, potassium hydroxide, aqueous ammonia, calcium hydroxide, magnesium hydroxide, calcium carbonate and calcium bicarbonate.
